# EUROPEAN PATENT APPLICATION

(11) **EP 3 051 477 A1**
(43) Date of publication of application: **03.08.2016**
(21) Application number: 16153137.1
(22) Date of filing: 28.01.2016
(51) Int. Cl.: G06Q 20/20, G06Q 20/32

(54) **POINT-OF-SALE SYSTEM THAT ENABLES OR DISABLES PROCESSING BASED ON PROPER PLACEMENT OF DEVICES THEREOF**

(30) Priority: 30.01.2015 JP 2015017203
(71) Applicant: Toshiba TEC Kabushiki Kaisha, Tokyo 141-0032 (JP)
(72) Inventor: OISHI, Sadatoshi, Shinagawa-ku, Tokyo 141-0032 (JP); TSUCHIDA, Sunao, Shinagawa-ku, Tokyo 141-0032 (JP)
(74) Representative: Takeuchi, Maya

(57) **Abstract**

A point-of-sale terminal includes a communication module configured to receive status data from a device that is chargeable using a charger, the status data representing whether or not the device is at a designated location where the device can be charged by the charger, and a processor configured to disable a selection of a specific processing by the point-of-sale apparatus if the status data indicating that the device is at the designated location is not received from the device, and to enable the selection of the specific processing if the status data indicating that the device is at the designated location is received from the device.

## Description

### FIELD

Embodiments described herein relate generally to a point-of-sale system that enables or disables processing based on proper placement of devices thereof.

### BACKGROUND

In recent years, a POS (Point of Sales) system has become commonplace in stores where various products and services are sold. In one example, the POS system comprises a POS terminal and a plurality of peripheral devices which are connected with the POS terminal in a wired or wireless manner. The peripheral devices include a touch scanner, a stationary barcode scanner, a receipt printer, a drawer, an automatic change dispenser, a credit card terminal, a password number input device, a point card terminal, a keyboard, and a display for customer.

If the peripheral devices are not returned to proper positions after being used, then a job cannot be executed smoothly in some cases, and thus, users are prompted to return the peripheral devices to proper positions.

In a case where the POS terminal is connected with the peripheral devices in a wired manner, for example, by a communication cable (e.g., USB, RS-232C), the peripheral devices are powered by a power cable. As a consequence, communication cables and power cables are deployed in the POS system in a complex manner, which undermines the beauty of a store. Moreover, a large number of wires may reduce the maintainability of the peripheral devices. Thus, a POS system has been developed in which the POS terminal is connected with a plurality of peripheral devices in a wireless manner; however, when peripheral devices are connected with a POS terminal in a wireless manner, users may forget to return the peripheral devices at their proper locations.

As a technology for preventing a wireless device from being misplaced, a technology has been developed which warns, with a warning tone, when a wireless device has been misplaced.

### DESCRIPTION OF THE DRAWINGS

Fig. 1 is a perspective view of a wireless POS system according to one or more embodiments.
Figs. 2A-2C each depicts a screen displayed by a wireless POS system according to one or more embodiments.
Fig. 3 is a block diagram illustrating the wireless POS system according to one or more embodiments.
Fig. 4 is a flowchart illustrating an operation carried out by a wireless POS system according to a first embodiment.
Fig. 5 is a flowchart illustrating an operation carried out by a wireless POS system according to a second embodiment.
Fig. 6 is a perspective view of a wireless POS system according to a third embodiment.
Fig. 7 is a flowchart illustrating an operation carried out by a wireless POS system according to the third embodiment.
Fig. 8 is a block diagram illustrating a wireless POS system according to a fourth embodiment.
Figs. 9A-9B each depicts a screen displayed by a wireless POS system according to the fourth embodiment.

### DETAILED DESCRIPTION

In accordance with an embodiment, a point-of-sale terminal includes a communication module configured to receive status data from a device that is chargeable using a charger, the status data representing whether or not the device is at a designated location where the device can be charged by the charger, and a processor configured to disable a selection of a specific processing by the point-of-sale apparatus if the status data indicating that the device is at the designated location is not received from the device, and to enable the selection of the specific processing if the status data indicating that the device is at the designated location is received from the device.

Preferably, the processor is further configured to display a prompt that includes a message to return the device to the designated position.

Preferably, the processor displays the prompt when neither new commodity data nor the status data indicating that the device is at the designated location is received within a predefined period of time.

Preferably, the device, when placed at the designated position, reads a code that is displayed near the designated position, and transmits the code to the communication module as the status data.

Preferably, the device, when placed at the designated position, is charged by the charger, and transmits data indicating that power reception from the charger has started or is ongoing, to the communication module as the status data.

Preferably, the specific processing is processing to settle a transaction based on the commodity data received from the device.

Preferably, the processor is configured to generate a user interface (UI) that includes a UI element by which the specific processing is selected, the UI element being disabled for selection if the status data indicating that the device is at the designated location is not received from the device, and enabled for selection if the status data indicating that the device is at the designated location is received from the device.

The present invention further relates to a point-of-sale terminal, comprising:a communication module configured to receive from a device that is chargeable using a charger, one of a first code relating to a commodity to be purchased and a second code relating to a location of the device; and a processor configured to disable a specific processing based on the first code by the point-of-sale terminal if the second code is not received after the first code is received and to enable the specific processing based on the first code if the second code is received after the first code is received.

Preferably, the device includes a code reader, the first code being obtained by reading a code displayed on a commodity using the code reader, and the second code being obtained by reading a code that is displayed near the charger.

Preferably, the processor is further configured to display a prompt that includes a message to return the device to a chargeable position.

Preferably, the device, when placed at the chargeable position, is able to read the code that is displayed near the charger.

Preferably, the processor displays the prompt if the second code is not received within a predefined period of time after the first code is received.

Preferably, the specific processing is processing to settle a transaction based on the first code.

Preferably, the processor is configured to generate a user interface (UI) that includes a UI element by which the specific processing is selected, the UI element being disabled for selection if the second code is not received after the first code is received and enabled for selection if the second barcode information is received after the first code is received.

The present invention further relates to a method of operating a point-of-sale terminal, comprising: receiving status data from a device that is chargeable using a charger, the status data representing whether or not the device is at a designated location where the device can be charged by the charger; displaying a user interface (UI) that includes a UI element by which a specific processing is selected; disabling the selection of the UI element if the status data indicating that the device is at the designated location is not received from the device; and enabling the selection of the UI element if the status data indicating that the device is at the designated location is received from the device.

Preferably, the method further comprises: displaying a prompt that includes a message to return the device to the designated position when neither new commodity data nor the status data indicating that the device is at the designated location is received within a predefined period of time.

Preferably, code data that the device generates upon reading a code that is displayed near the designated position, is transmitted by the device as the status data.

Preferably, data indicating that power reception from the charger has started or is ongoing, is transmitted by the device as the status data.

Preferably, the specific processing is processing to settle a transaction based on the commodity data received from the device.

Preferably, the status data is received wirelessly and the device is chargeable in a non-contact manner.

The present invention can effectively and surely prevent a wireless device from being misplaced, thereby preventing the device from being out of charge.

Embodiments of the present invention are described below, as non-limiting examples, with reference to accompanying drawings.

### (The First Embodiment)

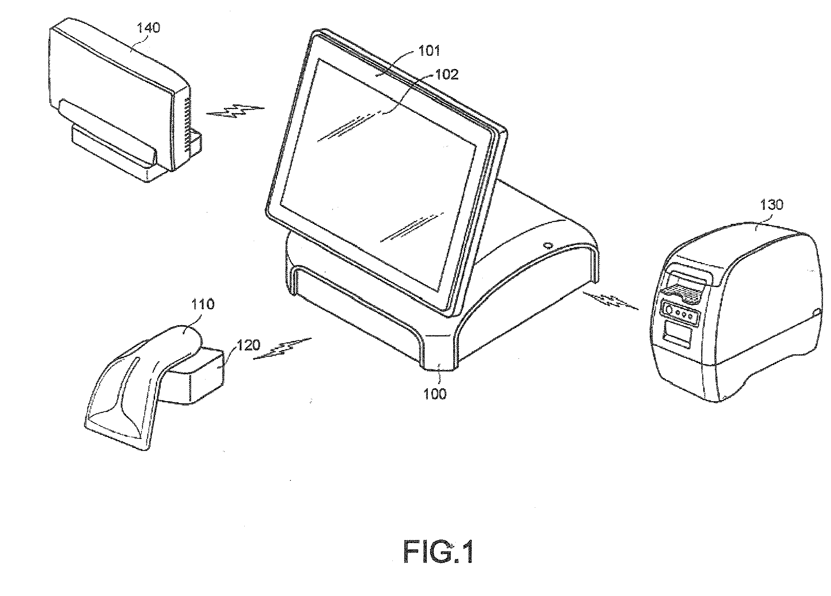

Fig. 1 is a perspective view of a wireless POS system according to the first embodiment. Described herein is how the first embodiment prevents a peripheral device which is connected with a POS terminal in a wireless manner from being misplaced; however, the embodiment is also applicable to preventing a peripheral device which is connected with a POS terminal by a cable from being misplaced.

A wireless POS system comprises a POS terminal 100 and a plurality of peripheral devices. The POS terminal 100 which comprises a display section 101 and an input section (e.g., touch panel) 102 is connected, through wireless communication, to peripheral devices which include a touch scanner 110, a receipt printer 130 and a customer display 140. The POS terminal 100 is further connected with other peripheral devices such as a stationary barcode scanner, a drawer, an automatic change dispenser, a credit card terminal, a password number input device, a point card terminal, a keyboard and a display for customer in a wired or wireless manner. The touch scanner 110 is placed on a charging table 120 which supplies power for the touch scanner 110. The power can be supplied in an electrode-based contact manner or using a non-contact power supply method represented by Qi®. When a non-contact power supply method is employed, the touch scanner 110 can be supplied with power merely by being positioned nearby the charging table 120.

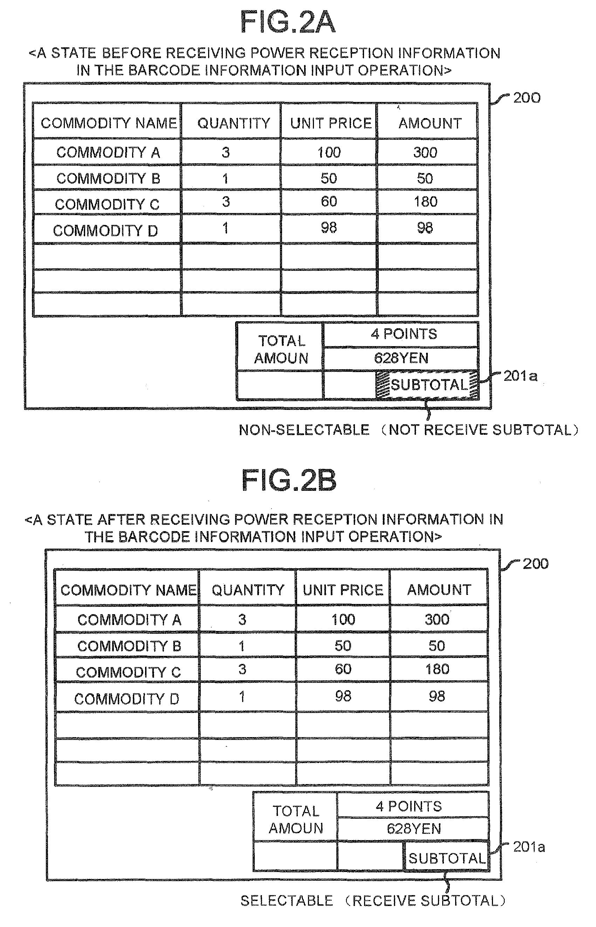

Fig. 2A and Fig. 2B depict an application screen displayed by the wireless POS system according to the first embodiment for commodity registration. The application screen will be described later in detail.

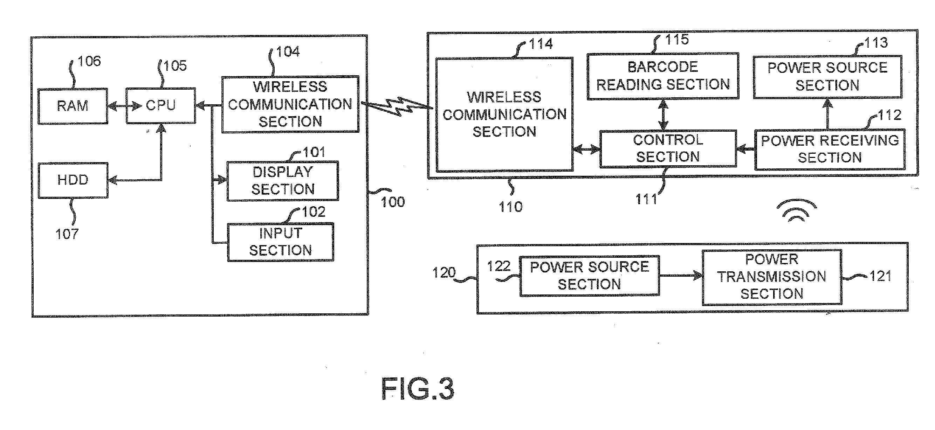

Fig. 3 is a block diagram illustrating the wireless POS system according to the first embodiment. In Fig. 3, the relationship among the POS terminal 100, the touch scanner 110 and the charging table 120 is illustrated and other devices are not depicted.

The POS terminal 100 comprises a display section 101, an input section 102, a wireless communication section 104 (e.g., a wireless communication adapter or card), a CPU 105, a RAM 106 and an HDD (Hard Disk Drive) 107, wherein the CPU 105 is connected with the display section 101, the input section 102, the wireless communication section 104, the RAM 106 and the HDD 107. The program of the POS terminal 100 is stored in the HDD 107, and the program is loaded into the RAM 106 and executed by the CPU 105 as needed. The result of the execution of the program is displayed on the display section 101, and a store clerk inputs various kinds of information through the input section 102 represented by touch panel.

The touch scanner 110 comprises a control section 111, a power receiving section 112 (charger), a power source section 113, a wireless communication section 114 and a barcode reading section 115. The charging table 120 comprises a power transmission section 121 consisting of power transmission coils and a control section (not shown) and a power source section 122. The power receiving section 112 of the touch scanner 110, which comprises power receiving coils, a rectifying circuit and a control section (not shown), receives electric power through magnetic coupling with the power transmission coils of the power transmission section 121 arranged on the charging table 120 to charge the power source section 113 with the electric power received.

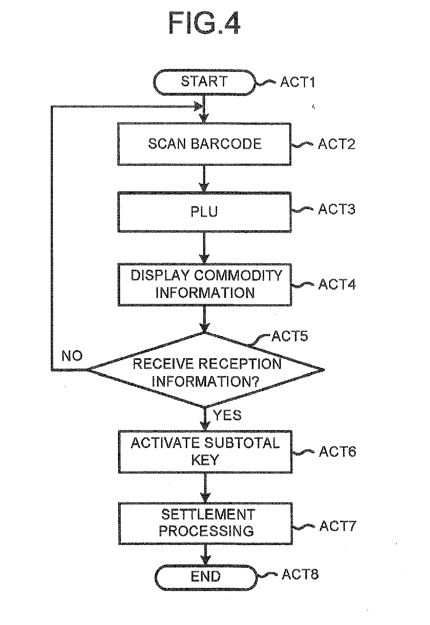

Fig. 4 is a flowchart exemplifying the operation carried out by the wireless POS system according to the first embodiment.

For example, a cashier inputs a commodity registration job start instruction (the CPU 105 starts a commodity registration job according to the input) from the input section 102 of the POS terminal 100 (Act 1) and thereafter scans the barcode of a commodity using the touch scanner 110 (Act 2). The barcode information (unique numerical data) read by the barcode reading section 115 of the touch scanner 110 is transmitted to the control section 111 and sent from the wireless communication section 114, and if the barcode information is received by the wireless communication section 104 of the POS terminal 100, then the CPU 105 refers to the HDD 107 to extract the commodity information (a commodity name and an amount) associated with the received barcode information (Act 3) and displays the commodity name and the amount on the display section 101 (Act 4) . Further, the operation of reading the commodity name and the amount from barcode information in ACT 3 is referred to as PLU (Price Look Up). If the commodity name and the amount associated with the received barcode information are not registered in the HDD, then a host computer located outside of the POS terminal 100 is queried to acquire a commodity name and an amount associated with the received barcode information. The acquisition of a commodity name and an amount associated with the received barcode information from the host computer is not described herein.

The foregoing commodity registration counts the number of commodity quantities. That is, the number of times the touch scanner 110 is used to scan the barcode of a commodity is counted. For example, if three commodities A are registered, each of the barcode of the commodities A is scanned by the touch scanner 110. As a result a number '3' is input. Then, the touch scanner 110 scans the barcode of a commodity B, and sequentially, the touch scanner 110 scans each of the barcode of three commodities C resulting in a number '3' being input. Next, the touch scanner 110 scans the barcode of a commodity D and so on; the display section 101 displays the application screen 200 shown in Fig. 2A until the touch scanner 110 is placed on the charging table 120. The display section 101 displays the application screen 200 shown in Fig. 2B after the touch scanner 110 is placed on the charging table 120, that is, the display section 101 switches from the application screen 200 shown in Fig. 2A to the application screen 200 shown in Fig. 2B.

Herein, a control processing is described which is executed after the touch scanner 110 is placed on the charging table 120. After the touch scanner 110 is placed on the charging table 120, the power receiving section 112 of the touch scanner 110 detects the magnetic coupling of the power receiving coils thereof with the power transmission coils of the power transmission section 121 of the charging table 120, the power transmission section 121 of the charging table 120 starts transmitting electric power, and the power receiving section 112 of the touch scanner 110 starts receiving electric power. The electric power received by the power receiving section 112 is transmitted to the power source section 113, and in the meantime, the power receiving section 112 notifies the control section 111 of the start of the reception of electric power or the ongoing reception of electric power, and the control section 111 transmits power reception information representing the start of reception of electric power or the ongoing reception of electric power to the wireless communication section 104 of the POS terminal 100 via the wireless communication section 114.

Herein, if the CPU 105 recognizes that the power reception information is received (Act 5: Yes), then the display section 101 switches from the application screen 200 shown in Fig. 2A to the application screen 200 shown in Fig. 2B, and the CPU 105 is ready to receive an instruction for subtotaling based on a subtotal key 201a (i.e., a selection of the subtotal key 201a). That is, the CPU 105 activates the subtotal key 201a on the application screen 200 to permit the reception of a request for settlement processing based on commodity information (Act 6), and carries out the settlement processing based on commodity information upon receipt of the request (Act 7).

The display section 101 displays the application screen 200 shown in Fig. 2A and the CPU 105 rejects receiving an instruction for subtotaling based on the subtotal key 201a (subtotal key cannot be selected) until the touch scanner 110 is placed on the charging table 120 (i.e., until the CPU 105 recognizes that the power reception information is received) . That is, during the period the touch scanner 110 is not placed on the charging table 120 (during the period power reception information is not received by the CPU 105) (Act 5: No). For example, the subtotal key 201a is grayed out (the subtotal key 201a is displayed in a light gray color) on the application screen 200 to visually indicate the instruction for subtotaling will not be accepted. That is, the CPU 105 deactivates the subtotal key 201a on the application screen 200 to disable receiving a request for settlement processing based on commodity information. Thus, the POS terminal 100 cannot proceed to the settlement processing in Act 7.

In this way, a settlement processing cannot be completed when the touch scanner 110 is not returned to the charging table 120 (fixed position). To carry out a settlement processing, the touch scanner 110 must be placed on the charging table 120 (fixed position), thus preventing the touch scanner from being misplaced. Further, the fixed position refers to a chargeable position between the touch scanner 110 and the charging table 120.

### (The Second Embodiment)

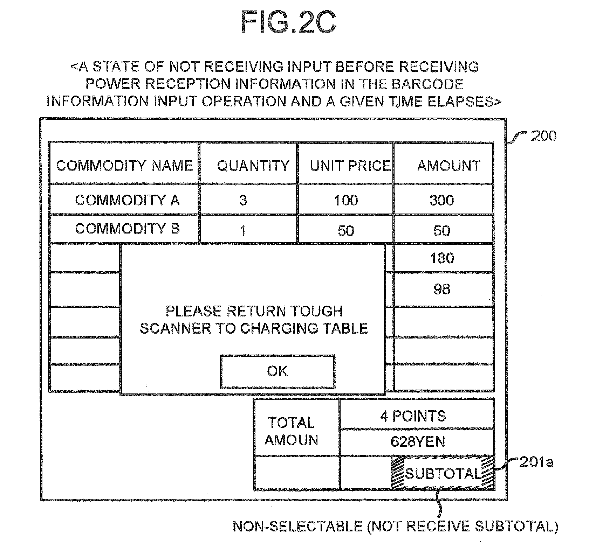

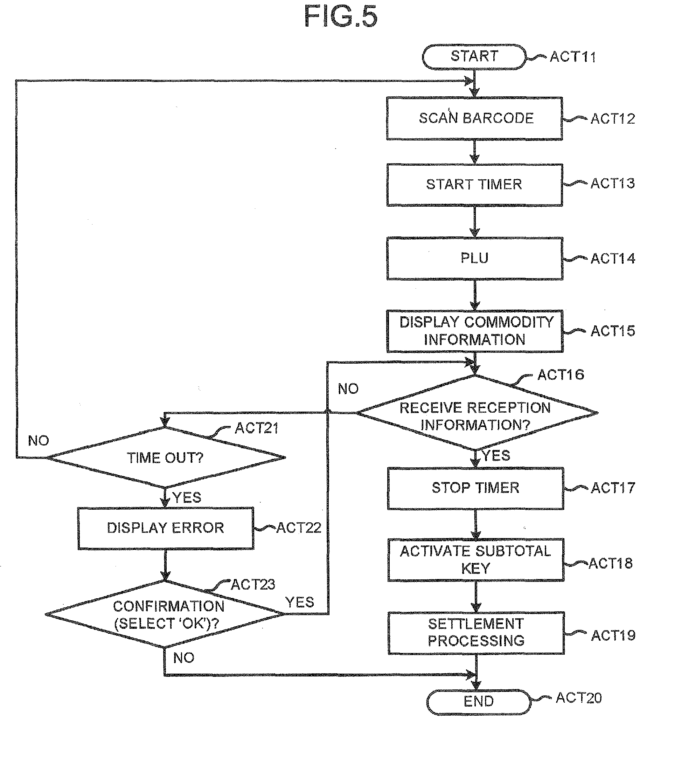

Fig. 5 is a flowchart exemplifying the operation carried out by a wireless POS system according to the second embodiment. Moreover, the structure of the machine of the second embodiment is identical to that of the first embodiment (Fig. 1 and Fig. 2) and is therefore not repeated.

For example, a cashier inputs a commodity registration job start instruction (the CPU 105 starts a commodity registration job according to the input) through the input section 102 of the POS terminal 100 (Act 11) and thereafter scans the barcode of a commodity using the touch scanner 110 (Act 12) . The barcode information read by the barcode reading section 115 of the touch scanner 110 is transmitted to the control section 111 and sent from the wireless communication section 114, and if the barcode information is received by the wireless communication section 104 of the POS terminal 100, then the CPU 105 starts a timer (Act 13) . Then, the CPU 105 refers to the HDD 107 to extract the commodity information (a commodity name and an amount) associated with the barcode information (Act 14) and displays the commodity name and the amount on the display section 101 (Act 15). Further, the operation of reading a commodity name and an amount according to the barcode information carried out in Act 14 is referred to as PLU (Price Look Up) . If the commodity information is not registered in the HDD, then a host computer located outside of the POS terminal 100 is queried to acquire a commodity name and an amount associated with the barcode information. The acquisition of a commodity name and an amount associated with the barcode information from the host computer is not described.

The foregoing commodity registration counts the number of commodity quantities. The display section 101 continues to display the application screen 200 shown in Fig. 2A if the time period during which no information is input is shorter than a specific time, until the touch scanner 110 is placed on the charging table 120; the display section 101 displays the application screen 200 shown in Fig. 2B if the touch scanner 110 is placed on the charging table 120. The CPU 105 outputs a warning if the time period during which no information is input is longer than a specific time (time-out condition) until the touch scanner 110 is placed on the charging table 120. For example, the display section 101 displays the application screen 200 shown in Fig. 2C, and if the touch scanner 110 is thereafter placed on the charging table 120, then the display section 101 displays the application screen 200 shown in Fig. 2B. That is, the display section 101 switches from the application screen 200 shown in Fig. 2A to the application screen 200 shown in Fig. 2B or Fig. 2C or from the application screen 200 shown in Fig. 2C to the application screen 200 shown in Fig. 2B.

Herein, a control processing is described which is executed after the touch scanner 110 is placed on the charging table 120. If the touch scanner 110 is placed on the charging table 120, then the power receiving section 112 of the touch scanner 110 detects the magnetic coupling of the power receiving coils thereof with the power transmission coils of the power transmission section 121 of the charging table 120. Thereafter, the power transmission section 121 of the charging table 120 starts transmitting electric power, and the power receiving section 112 of the touch scanner 110 starts receiving electric power. The electric power received by the power receiving section 112 is transmitted to the power source section 113, and in the meantime, the power receiving section 112 notifies the control section 111 of the reception of electric power, and the control section 111 transmits power reception information representing the start of the reception of electric power or the ongoing reception of electric power to the wireless communication section 104 of the POS terminal 100 via the wireless communication section 114.

Herein, if the CPU 105 recognizes that the power reception information is received (Act 16: Yes), then the CPU 105 stops the timer (Act 17), and the display section 101 switches from the application screen 200 shown in Fig. 2A to the application screen 200 shown in Fig. 2B, activates the subtotal key 201a on the application screen (Act 18) and carries out a settlement processing based on commodity information (Act 19).

As described above, when the display section 101 displays the application screen 200 shown in Fig. 2A, the CPU 105 rejects receiving an instruction for subtotaling based on the subtotal key 201a (subtotal key cannot be selected) until the touch scanner 110 is placed on the charging table 120 (i.e., until the CPU 105 recognizes that the power reception information is received). That is, during the period the touch scanner 110 is not placed on the charging table 120 (during the period power reception information is not received by the CPU 105) (Act 16: No). Further, the CPU 105 monitors the value displayed by the timer (Act 21) and displays, on the application screen 200, an error or a message for prompting the user to place the touch scanner on the charging table (Act 22) if the time of the state in which there is no input (for example, no barcode information is received) is longer than a specific time (Act 21: Yes) . For example, the display section 101 displays the application screen 200 shown in Fig. 2C.

Herein, if the touch scanner 110 is placed on the charging table 120 and the key 'OK' included in the confirmation screen of the application screen 200 shown in Fig. 2C is selected (Act 23: Yes), then the power reception confirmation state is recovered (Act 16: Yes) and Acts 17-20 are carried out.

Further, the operation of selecting the key OK' through the application screen 200 shown in Fig. 2C may be omitted. That is, if the touch scanner 110 is placed on the charging table 120 and the CPU 105 recognizes that the power reception information is received, then the application screen 200 shown in Fig. 2B is displayed even if the key 'OK' is not selected.

If the value displayed by the timer is not beyond a specific value (Act 21 : No), the operations after the barcode scanning operation (Act 12) is continued. In this case, the application screen 200 shown in Fig. 2A is displayed.

In this way, if the touch scanner 110 is not returned to the charging table 120 (fixed position), then an error or a message for prompting the user to place the touch scanner on the charging table is displayed on the application screen 200 shown in Fig. 2C and a settlement job is prevented from being completed. To carry out a settlement processing, the touch scanner 110 is required to be placed on the charging table 120 (fixed position), thus preventing the touch scanner 110 from being misplaced.

### (The Third Embodiment)

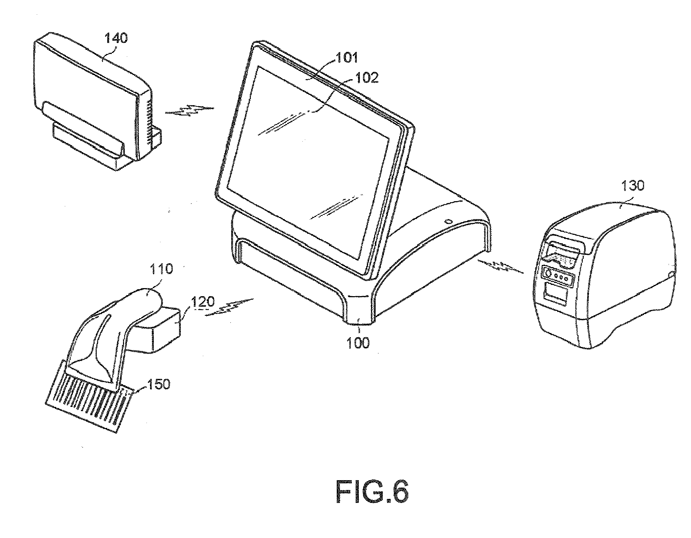

Fig. 6 is a perspective view of a wireless POS system according to the third embodiment. Moreover, the identical elements shown in Fig. 1 and Fig. 6 are denoted by the same reference numbers and are not repeated.

A dedicated barcode 150 is arranged nearby or integrated with the charging table 120. Further, when the touch scanner 110 is placed at a position where the power receiving section 112 of the touch scanner 110 can be charged, the dedicated barcode 150 is a barcode (referring to the dedicated barcode 150 shown in Fig. 6) located at a position where the barcode can be read by the barcode reading section 115 of the touch scanner 110.

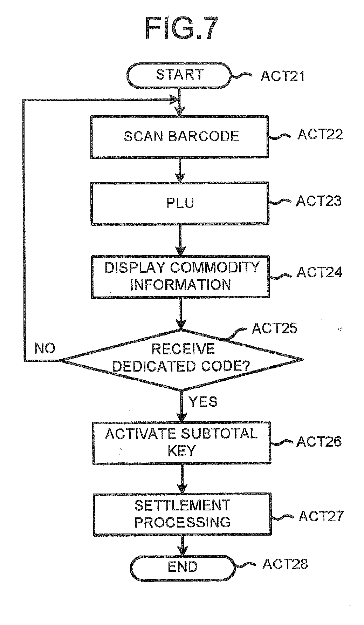

Fig. 7 is a flowchart exemplifying the operation carried out by a wireless POS system according to the third embodiment.

For example, a cashier inputs a commodity registration job start instruction (the CPU 105 starts a commodity registration job according to the input) through the input section 102 of the POS terminal 100 (Act 21) and thereafter scans the barcode of a commodity using the touch scanner 110 (Act 22) . The barcode information read by the barcode reading section 115 of the touch scanner 110 is transmitted to the control section 111 and sent from the wireless communication section 114, and if the barcode information is received by the wireless communication section 104 of the POS terminal 100, then the CPU 105 refers to the HDD 107 to extract the commodity information (a commodity name and an amount) associated with the barcode information (Act 23) and displays the commodity name and the amount on the display section 101 (Act 24). Further, the operation of reading a commodity name and an amount from the barcode information carried out in Act 23 is referred to as PLU (Price Look Up) . If the commodity information is not registered in the HDD, then a host computer located outside of the POS terminal 100 is queried to acquire the commodity name and the amount associated with the barcode information. The acquisition of a commodity name and an amount associated with the barcode information from the host computer is not described herein.

The foregoing commodity registration substantially only counts the number of commodity quantities (Act 25: No) . The display section 101 continues to display the application screen 200 shown in Fig. 2A until the touch scanner 110 is placed on the charging table 120 (fixed position) and the dedicated barcode 150 is recognized. If the touch scanner 110 is placed on the charging table 120 (fixed position) and the dedicated barcode 150 is read by the touch scanner 110, the dedicated barcode 150 is transmitted to the control section 111 and sent from the wireless communication section 114 to the POS terminal 100. Then, the CPU 105 refers to the HDD 107 to recognize the read dedicated barcode 105 (recognize the read dedicated barcode 105 as a barcode representing the arrangement of the touch scanner 110 on the charging table 120) (Act 23) (Act 25: Yes). In this case, no new commodity information is added (Act 24).

If the touch scanner 110 is placed on the charging table 120 (fixed position) and the dedicated barcode 150 is recognized (Act 25: Yes), the display section 101 switches from the application screen 200 shown in Fig. 2A to the application screen 200 shown in Fig. 2B, and the CPU 105 is ready to receive an instruction for subtotaling based on the subtotal key 201a (subtotal key can be selected) . That is, the CPU 105 activates the subtotal key 201a on the application screen 200 to permit the reception of a request for settlement processing based on commodity information (Act 26), and carries out the settlement processing based on commodity information upon receipt of the request (Act 27) .

If the dedicated barcode 150 is not read (Act 25: No), the subtotal key 201a is deactivated, and thus, the cashier cannot proceed to the settlement processing in Act 27.

In this way, a settlement processing cannot be completed when the touch scanner 110 is not returned to the charging table 120 (fixed position). To carry out the settlement processing, the touch scanner 110 must be placed on the charging table 120 (fixed position), thus definitely preventing the touch scanner 110 from being misplaced.

### (The Fourth Embodiment)

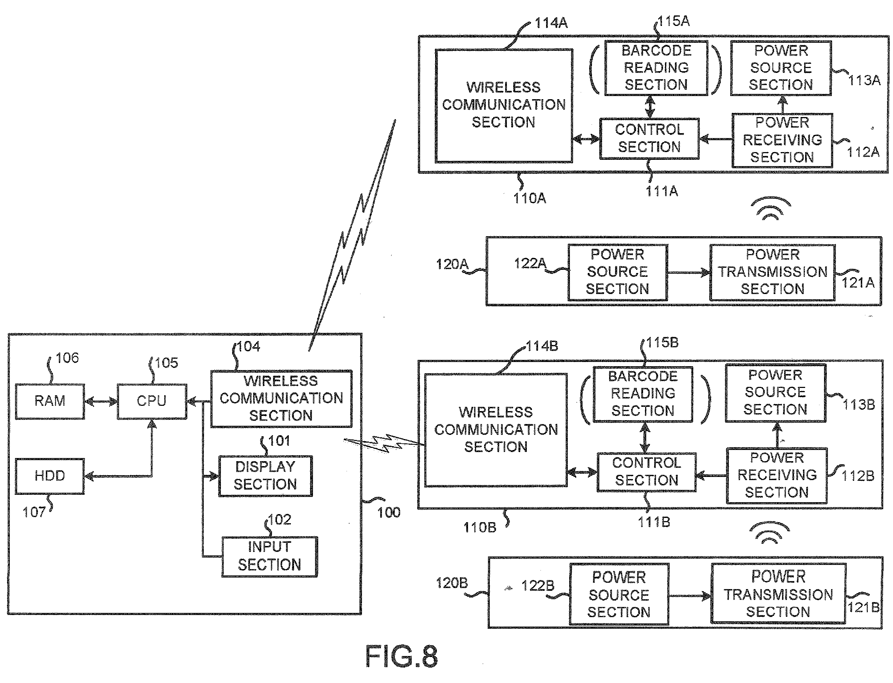

The description of the first through third embodiments is directed to preventing one touch scanner 110 (one peripheral device) from being misplaced. However, the first through third embodiments are applicable to more than one peripheral device. Herein, it is described in conjunction with Fig. 8, how to prevent a peripheral device 110A (e.g., a touch scanner) from being misplaced, i.e., forgotten to be placed on a charging table 120A (e.g. , a power receiving table for touch scanner or a power receiving table shared by peripheral devices) after use, and a peripheral device 110B (e.g., a credit card terminal) from being misplaced, i.e., forgotten to be placed on a charging table 120B (e.g., a power receiving table for credit card terminal or a power receiving table shared by peripheral devices) after use . The basic components of the peripheral device 110A and the charging table 120A as well as the peripheral device 110B and the charging table 120B are identical to that of the touch scanner 110 and the charging table 120 and are therefore not described in detail. Further, if the peripheral device 110A is a touch scanner, then the peripheral device 110A comprises a barcode reading section 115A. Similarly, if the peripheral device 110B is a touch scanner, then the peripheral device 110B comprises a barcode reading section 115B.

A machine IDA is assigned to the peripheral device 110A and a machine IDB is assigned to the peripheral device 110B. For example, the HDD of the POS terminal 100 stores a list of machine IDs of monitored objects, wherein the machine IDA and a peripheral device name A as well as the machine IDB and a peripheral device name B are stored in the list of machine IDs of monitored objects.

If the peripheral device 110A is returned to the charging table 120A (fixed position), then the power receiving section 112A of the peripheral device 110A detects the magnetic coupling of the power receiving coils thereof with the power transmission coils of the power transmission section 121A of the charging table 120A. Then, the power transmission section 121A of the charging table 120A starts transmitting electric power, and the power receiving section 112A of the peripheral device 110A starts receiving electric power. The electric power received by the power receiving section 112A is transmitted to a power source section 113A, and in the meantime, the power receiving section 112A notifies a control section 111A of the start of the reception of electric power or the ongoing reception of electric power, and the control section 111A sends power reception information A representing the start of the reception of electric power or the ongoing reception of electric power and the machine IDA, to the wireless communication section 104 of the POS terminal 100 via a wireless communication section 114A.

If the peripheral device 110B is returned to the charging table 120B (fixed position), then a power receiving section 112B of the peripheral device 110B detects the magnetic coupling of the power receiving coils thereof with the power transmission coils of a power transmission section 121B of the charging table 120B. Then, the power transmission section 121B of the charging table 120B starts transmitting electric power, and the power receiving section 112B of the peripheral device 110B starts receiving electric power. The electric power received by the power receiving section 112B is transmitted to a power source section 113B, and in the meantime, the power receiving section 112B notifies a control section 111B of the start of the reception of electric power or the ongoing reception of electric power, and the control section 111B sends power reception information B representing the start of the electric reception of power or the ongoing reception of electric power and the machine IDB, to the wireless communication section 104 of the POS terminal 100 via a wireless communication section 114B.

Herein, if the CPU 105 recognizes the reception of the power reception information A and the machine IDA as well as the power reception information B and the machine IDB, and the CPU 105 recognizes, according to the list of machine IDs of monitored objects, that all peripheral devices (refer to the peripheral devices 110A and 110B) are returned to their proper fixed positions, the display section 101 switches from the application screen 200 shown in Fig. 2A to the application screen 200 shown in Fig. 2B, and the CPU 105 is ready to receive an instruction for subtotaling based on a subtotal key 201a (the subtotal key can be selected) . That is, the CPU 105 activates the subtotal key 201a on the application screen 200 to permit the reception of a request for settlement processing based on commodity information, and carries out the settlement processing based on commodity information upon receipt of the request.

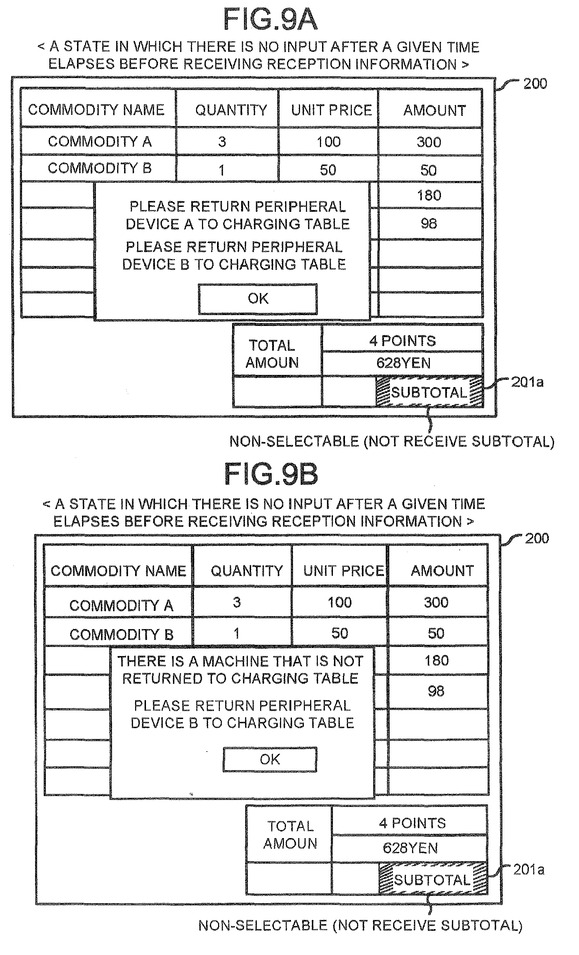

For example, if the CPU 105 recognizes that neither the power reception information A and the machine IDA nor the power reception information B and the machine IDB is received and the time period of the state during which no information is input is greater than a specific time, then the display section 101 displays the application screen 200 shown in Fig. 9A on which a message 'return the peripheral devices A and B to the charging tables' is displayed. If the peripheral device 110A is placed on the charging table 120A (the CPU 105 recognizes that the power reception information A and the machine IDA are received) and the key 'OK' on the confirmation screen of the application screen 200 shown in Fig. 9A is selected, then the display section 101 displays the application screen 200 shown in Fig. 9B on which a message 'there is a device that is not returned to the charging table. Please return the device that should be returned to the charging table, that is, the peripheral device B, to the charging table' is displayed.

Further, the operation of selecting the key 'OK' on the confirmation screen of the application screen 200 shown in Fig. 9A may be omitted. That is, if the peripheral device 110A is placed on the charging table 120A and the CPU 105 recognizes that the power reception information A and the machine IDA are received, then the application screen 200 shown in Fig. 9B is displayed even if the key 'OK' is not selected.

Then, if the peripheral device 110B is placed on the charging table 120B (the CPU 105 recognizes that the power reception information B and the machine IDB are received) and the key 'OK' on the application screen 200 shown in Fig. 9B is selected, then the display section 101 displays the application screen 200 shown in Fig. 2B.

In this way, if each peripheral device contained in the list of machine IDs of monitored objects is left at a proper position but not returned to a fixed position, then an error or a message for prompting the user to place the peripheral devices on charging tables is displayed on the application screen 200, as shown in Fig. 9A or 9B, thus preventing a settlement job from being completed. As each peripheral device contained in the list of machine IDs of monitored objects is required to be placed at a fixed position, the peripheral devices are prevented from being misplaced. Further, the power receiving tables may be power receiving tables separately dedicated to each peripheral device, or a universal power receiving table that is shared by all the peripheral devices.

Thus, according to the first embodiment to the fourth embodiment, peripheral devices can be prevented from being misplaced without adding a piece of a specific hardware. Further, even in a case where a plurality of peripheral devices is required to be prevented from being misplaced, as the reception of a signal shared by the plurality of peripheral devices (the reception of a combination of power reception information and a machine ID) is used as a trigger, the determination on whether or not each peripheral device is returned to a fixed position is simplified.

The first through the fourth embodiments avoid the problems associated with the misplacement of a small wireless device such as a touch scanner or a password number input reader, e.g., not returning the device to its proper fixed position after being used, the problems including the hindrance of the execution of a settlement job. Further, the first through fourth embodiments are also applicable to a case where peripheral devices are connected with each other in a wired manner.

Further, each operation included in the processing or control operation described in the first through fourth embodiments can be carried out by software. Thus, the foregoing processing and control operation can be carried out easily merely by installing and executing programs for carrying out the operation of the foregoing processing and control in a wireless POS system through a computer-readable storage medium in which the programs are stored.

For example, the wireless POS system (e.g., the CPU 105) can read the foregoing programs from the computer-readable storage medium which stores the read programs in a storage device such as the HDD 107 and install the programs. Alternatively, the wireless POS system can download the programs, store the downloaded programs in a memory device such as the HDD 107, and then install the programs. In this way, the wireless POS system (in particular the CPU 105) can realize the foregoing processing and control according to the installed programs.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A point-of-sale terminal, comprising:
a communication module configured to receive status data from a device that is chargeable using a charger, the status data representing whether or not the device is at a designated location where the device can be charged by the charger; and
a processor configured to disable a specific processing by the point-of-sale terminal if the status data indicating that the device is at the designated location is not received from the device, and to enable the specific processing if the status data indicating that the device is at the designated location is received from the device.

2. The point-of-sale terminal according to claim 1, wherein the processor is further configured to display a prompt that includes a message to return the device to the designated position.

3. The point-of-sale terminal according to claim 2, wherein the processor displays the prompt when neither new commodity data nor the status data indicating that the device is at the designated location is received within a predefined period of time.

4. The point-of-sale terminal according to claim 2 or 3, wherein the device, when placed at the designated position, reads a code that is displayed near the designated position, and transmits the code to the communication module as the status data.

5. The point-of-sale terminal according to any one of claims 1 to 4, wherein the device, when placed at the designated position, is charged by the charger, and transmits data indicating that power reception from the charger has started or is ongoing, to the communication module as the status data.

6. The point-of-sale terminal according to any one of claims 1 to 5, wherein the specific processing is processing to settle a transaction based on the commodity data received from the device.

7. The point-of-sale terminal according to any one of claims 1 to 6, wherein the processor is configured to generate a user interface (UI) that includes a UI element by which the specific processing is selected, the UI element being disabled for selection if the status data indicating that the device is at the designated location is not received from the device, and enabled for selection if the status data indicating that the device is at the designated location is received from the device.

8. A point-of-sale terminal, comprising:
a communication module configured to receive from a device that is chargeable using a charger, one of a first code relating to a commodity to be purchased and a second code relating to a location of the device; and
a processor configured to disable a specific processing based on the first code by the point-of-sale terminal if the second code is not received after the first code is received and to enable the specific processing based on the first code if the second code is received after the first code is received.

9. The point-of-sale terminal according to claim 8, wherein the device includes a code reader, the first code being obtained by reading a code displayed on a commodity using the code reader, and the second code being obtained by reading a code that is displayed near the charger.

10. A method of operating a point-of-sale terminal, comprising:
receiving status data from a device that is chargeable using a charger, the status data representing whether or not the device is at a designated location where the device can be charged by the charger;
displaying a user interface (UI) that includes a UI element by which a specific processing is selected;
disabling the selection of the UI element if the status data indicating that the device is at the designated location is not received from the device; and
enabling the selection of the UI element if the status data indicating that the device is at the designated location is received from the device.

11. The method according to claim 10, further comprising:
displaying a prompt that includes a message to return the device to the designated position when neither new commodity data nor the status data indicating that the device is at the designated location is received within a predefined period of time.

12. The method according to claim 10 or 11, wherein code data that the device generates upon reading a code that is displayed near the designated position, is transmitted by the device as the status data.

13. The method according to any one of claims 10 to 12, wherein data indicating that power reception from the charger has started or is ongoing, is transmitted by the device as the status data.

14. The method according to any one of claims 10 to 13, wherein the specific processing is processing to settle a transaction based on the commodity data received from the device.

15. The method according to any one of claims 10 to 14, wherein the status data is received wirelessly and the device is chargeable in a non-contact manner.
